# EUROPEAN PATENT APPLICATION

(11) **EP 4 738 632 A1**
(43) Date of publication of application: **06.05.2026**
(21) Application number: 25208517.0
(22) Date of filing: 14.10.2025
(51) Int. Cl.: H02G 3/32

(54) **CABLE GUIDE CLAMP**

(30) Priority: 15.10.2024 US 202418915689
(71) Applicant: Panduit Corp., Tinley Park, Illinois 60487 (US)
(72) Inventor: Bentley, Christopher, Tinley Park (US); Booth, Andrew W., Tinley Park (US)
(74) Representative: Bollinghaus, Emer

(57) **Abstract**

A cable guide clamp that secures cables. The cable guide clamp includes a main body and a clamping pad. The main body has a top, a bottom, a first end, a second end, and sides. The main body has a cylindrical opening that leads to a first passageway extending from the first end to the second end, and a rectangular opening that leads to a second passageway extending from the first end to the second end. A clamping pad is installed in the main body. A threaded bolt and nut are installed in the main body to securing the clamping pad and cable positioned within the main body.

## Description

### Field

The present disclosure relates to securing cables, and more particularly to a cable guide clamp for securing cables.

### Background

Cable cleats and other cable clamping devices are used to secure power cables once the cables have been positioned at desired locations. The current cable cleats and clamping devices fail to assist in pulling or guiding cables to the desired locations. Also, the range of cable cleats and clamping devices only accommodates cable diameters reaching generally 3 inches or 75 mm in diameter.

As a result, there is a need for a device that secures cables as well as a device that aids in guiding or pulling of the cables during installation. There is a need for a device that accommodates a range of cable diameters beyond 3 inches or 75 mm in diameter. There is a need for a device that accommodates cables positioned at an angle or cables that sag between clamps.

### Summary

The disclosure is directed to a cable guide clamp used to secure cables. The cable guide clamp includes a main body, a clamping pad, at least one threaded bolt and at least one nut. The main body has a top, a bottom, a first end, a second end, and sides. The main body has a cylindrical opening that leads to a first passageway extending from the first end to the second end and a rectangular opening that leads to a second passageway extending from the first end to the second end. The clamping pad is installed in the main body. The threaded bolt and the nut are installed in the main body to secure the clamping pad and cable positioned within the main body.

### Brief Description of the Drawings

FIG. 1 is a perspective view of the cable guide clamp of the present disclosure.
FIG. 2 is a perspective view of the main body of the cable guide clamp of FIG. 1
FIG. 3 is a front end view of the main body of the cable guide clamp of FIG. 2.
FIG. 4A is a cross sectional view of the main body of the cable guide clamp of FIG. 3 taken along line 4A-4A.
FIG. 4B is a cross sectional view of the main body of the cable guide clamp of FIG. 3 taken along line 4B-4B.
FIG. 5 is a perspective view of the clamping pad of the cable guide clamp of FIG. 1.
FIG. 6A is a top view of the clamping pad of FIG. 5.
FIG. 6B is a side view of the clamping pad of FIG. 5.
FIG. 6C is a front view of the clamping pad of FIG. 6A.
FIG. 6D is a cross sectional view of the clamping pad of FIG. 6A taken along line 6D-6D.
FIG. 7 is an exploded perspective view of the cable guide clamp of FIG. 1.
FIG. 8 is a partially exploded perspective view of the cable guide clamp of FIG. 1
FIG. 9 is a bottom perspective view of the cable guide clamp of FIG. 8.
FIG. 10 is a bottom perspective view of the cable guide clamp of FIG. 9 with the clamping pad positioned therein.
FIG. 11 is a top perspective view of the cable guide clamp of FIG. 10.
FIG. 12 is a perspective view of the cable guide clamp of FIG. 1 with a cable positioned therethrough.
FIG. 13 is a cross sectional view of the cable guide clamp of FIG. 12 taken along line 13-13.
FIG. 14 is a partial front view of the cross section of the cable guide clamp of FIG. 13.
FIG. 15 is a cross sectional view of the cable guide clamp of FIG. 12 taken along line 15-15.
FIG. 16A is a cross sectional view of the cable guide clamp of FIG. 15 with the cable positioned with equal bends.
FIG. 16B is a cross sectional view of the cable guide clamp of FIG. 15 with the cable positioned at an angle.

### Detailed Description

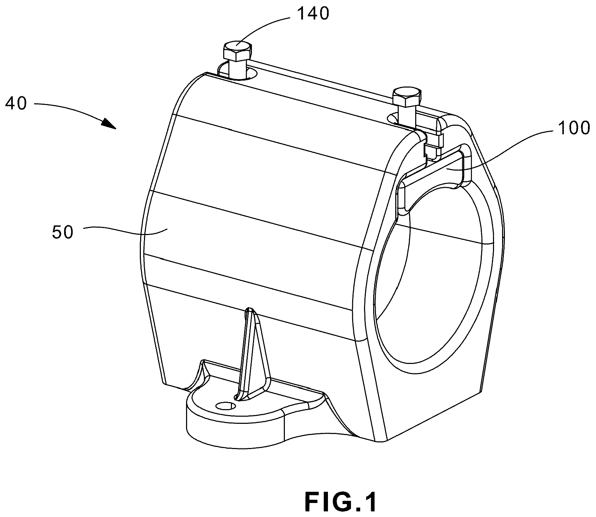

FIG. 1 is a perspective view of the cable guide clamp 40 of the present disclosure . The cable guide clamp 40 is designed for high voltage cables; however, other types of cables may be routed through the cable guide clamp. The cable guide clamp 40 includes a main body 50, a clamping pad 100 positioned within the main body 50, and threaded bolts 140 and nuts 146 positioned within the main body 50 to secure the clamping pad 100 and the cable positioned within the main body 50. The cable guide clamp 40 is assembled in a factory and delivered to an installation site as an assembled one piece cable guide clamp 40.

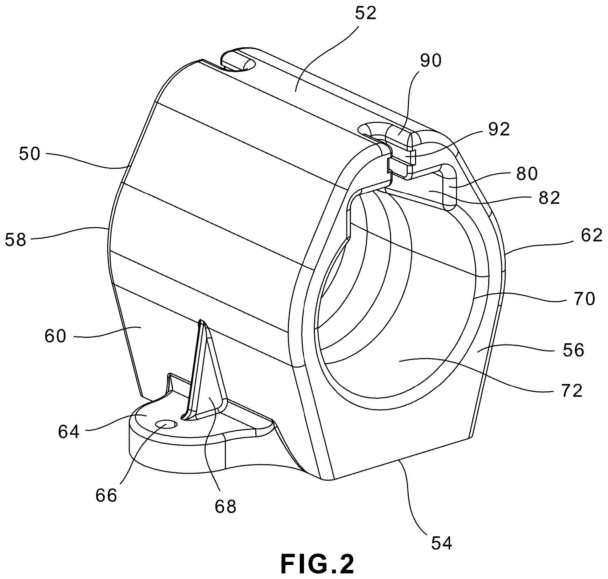

As illustrated in FIGS. 2-3, the main body 50 of the cable guide clamp 40 includes a top 52, a bottom 54, a first front end 56, a second back end 58, and two sides 60, 62. A fixing portion 64 extends from the bottom sides 60, 62 of the main body 50. Each fixing portion 64 includes a mounting hole 66 for receiving a fastener to mount and secure the main body 50 to a surface. The fixing portions 64 also include a support rib 68 for providing added support to the main body 50.

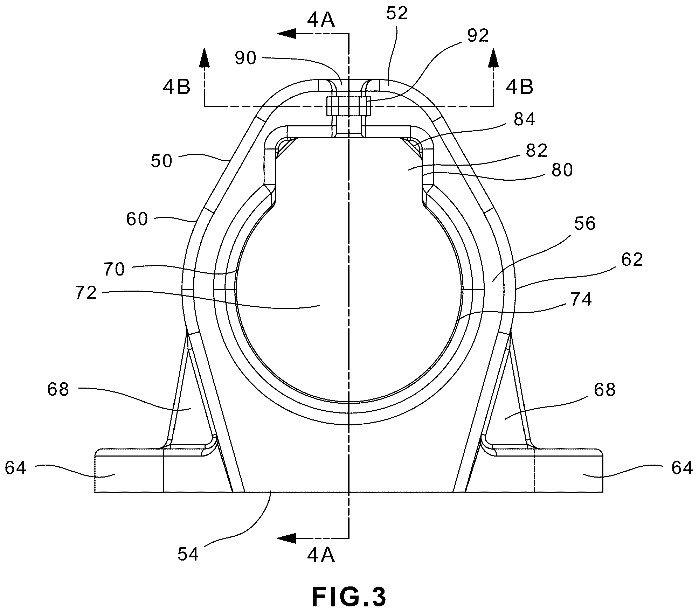

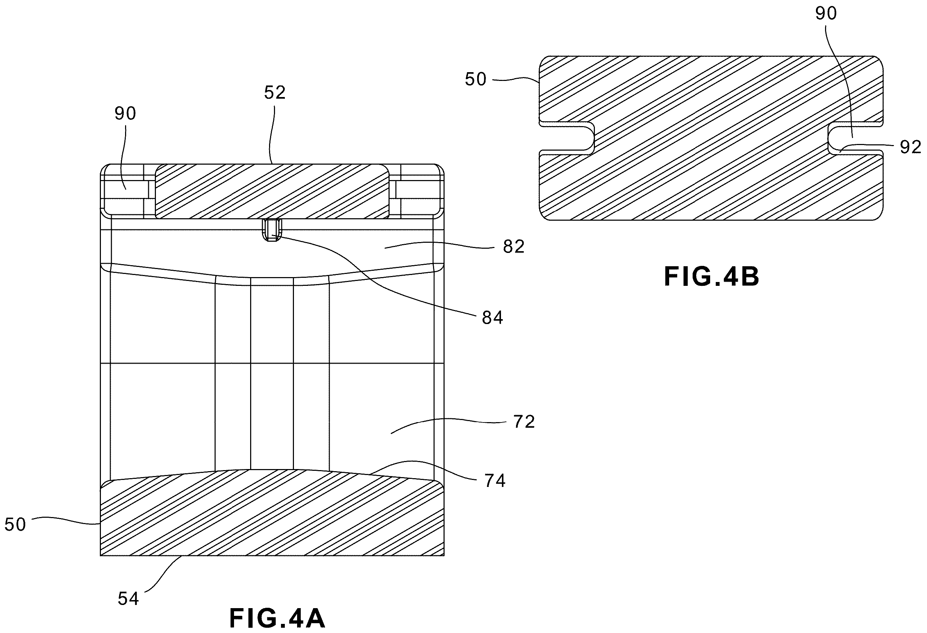

The main body 50 includes a generally cylindrical opening 70 that leads to a first passageway 72. The first passageway extends from the first front end 56 to the second back end 58. The main body 50 also includes a generally rectangular opening 80 positioned adjacent to the generally cylindrical opening 70. The generally rectangular opening 80 leads to a second passageway 82 that extends from the first front end 56 to the second back end 58. As illustrated in FIGS. 3 and 4A, the second passageway 82 includes angled uprights 84 for engaging the clamping pad 100. FIG. 4A illustrates the first passageway 72 having a pitched inner surface 74 to aid in guiding a cable through the cable guide clamp 40.

The top 52 of the main body 50 includes slotted openings 90 along the first front end 56 and the second back end 58 for receiving and housing the threaded bolts 140 and nuts 146, or other fasteners. The slotted openings 90 define recesses 92 that provide a tight fit pocket for the receiving and housing the nuts 146.

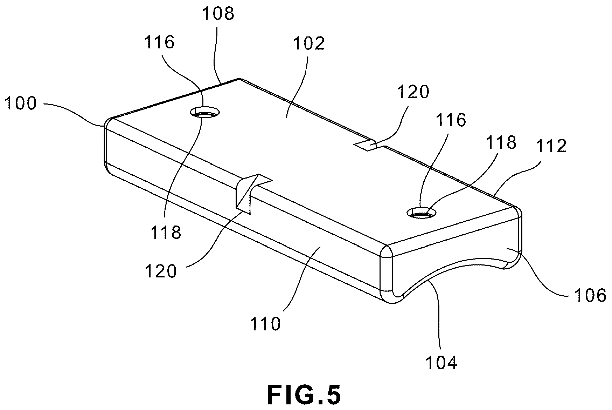

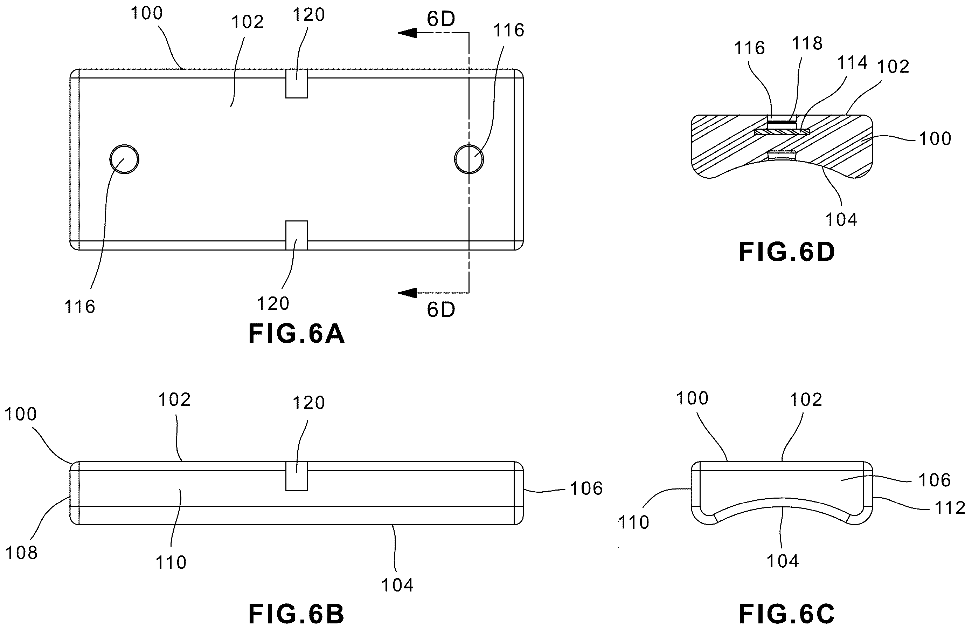

FIGS. 5-6D illustrate the clamping pad 100 that is installed in the main body 50. The clamping pad 100 includes a flat top 102, a bottom 104, a first front end 106, a second back end 108, a first side 110, and a second side 112. The clamping pad 100 also includes integral steel supports 114 (see FIG. 6D). The top 102 of the clamping pad 100 includes two mounting holes 116 designed to receive the threaded bolts 140, or other fastener, mounted in the main body 50 of the cable guide clamp 40. Each mounting hole 116 includes a retaining ring 118 (see FIG. 6D). The retaining rings 118 are engaged by the end of the threaded bolts 140 and use a slight interference fit to maintain the clamping pad 100 in the initial position within the main body 50.

The center of the clamping pad 100 includes notches 120 extending in the top 102 and the first and second sides 110, 112 of the clamping pad 100. The notches 120 are designed to receive the angled uprights 84 extending in the second passageway 82 of the main body 50. As illustrated in FIGS. 5 and 6C, the bottom 104 of the clamping pad 100 is arcuate to accommodate the cable to be clamped.

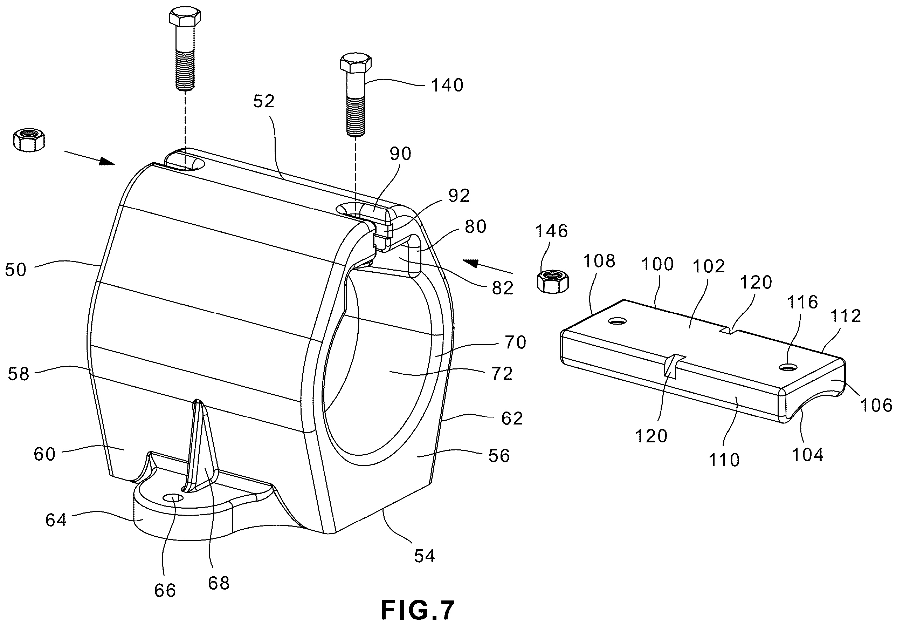

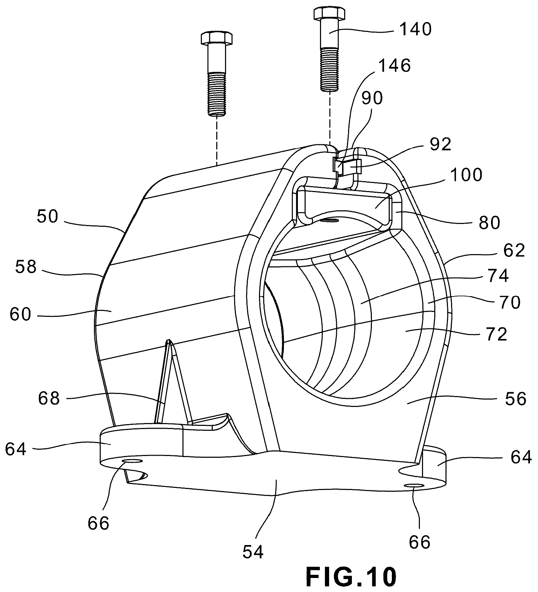

FIGS. 7-11 illustrate various exploded views of the cable guide clamp 40 prior to the cable guide clamp 40 being fully assembled. As illustrated in FIG. 7, the nuts 146 are positioned at the first front end 46 and the second back end 58. The nuts 146 are installed in the recesses 92 defined by the slotted openings 90 in the main body 50. The recesses 92 provide a tight fit pocket to ensure the nuts 146 remain installed in the main body 50.

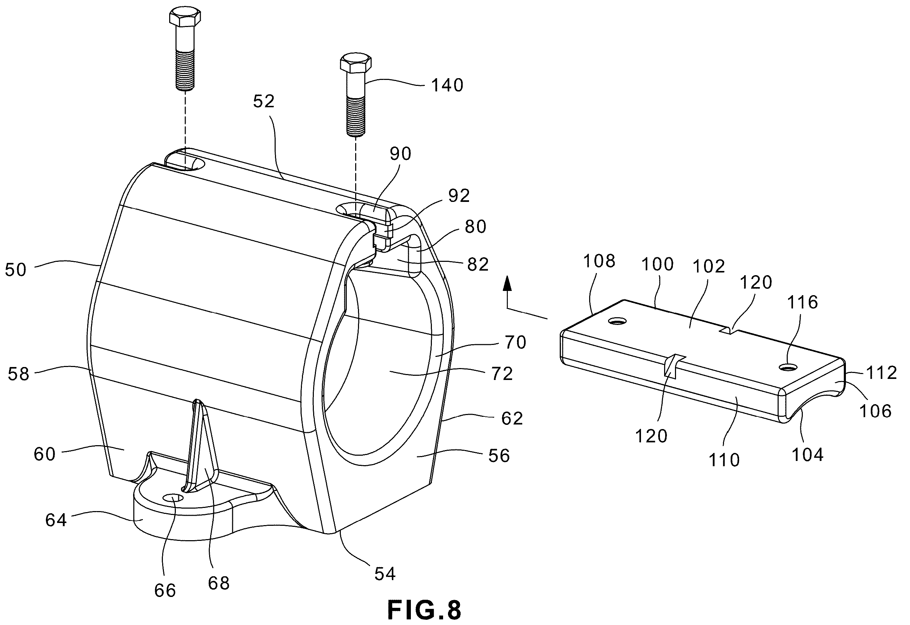

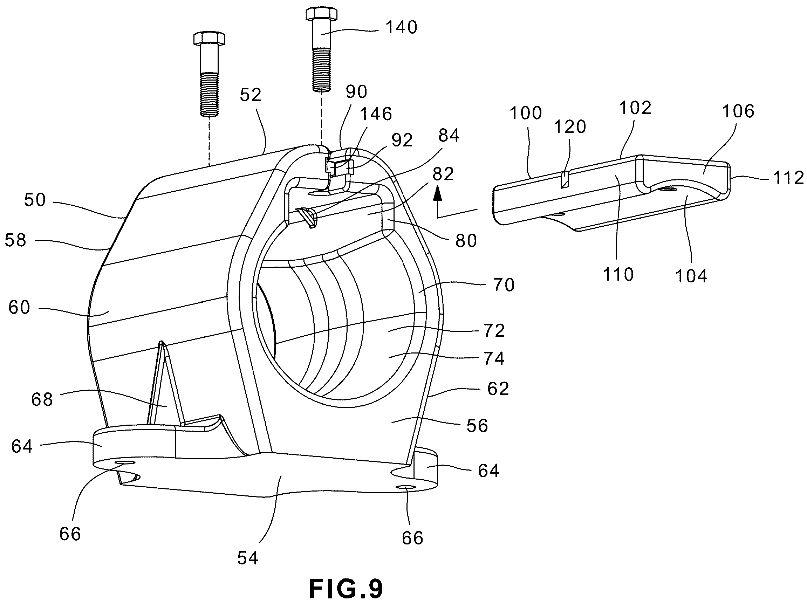

FIGS. 8 and 9 illustrate the clamping pad 100 positioned to be installed in the main body 50. The clamping pad 100 is positioned adjacent the rectangular opening 80 in the main body 50. The clamping pad 100 is installed within the second passageway 82 with the first front end 106 of the clamping pad 100 at the first front end 56 of the main body 50 and the second back end 108 of the clamping pad 100 at the second back end 58 of the main body 50. The angled uprights 84 extending into the second passageway 82 engage the notches 120 in the top 102 and first and second sides 110, 112 of the clamping pad 100.

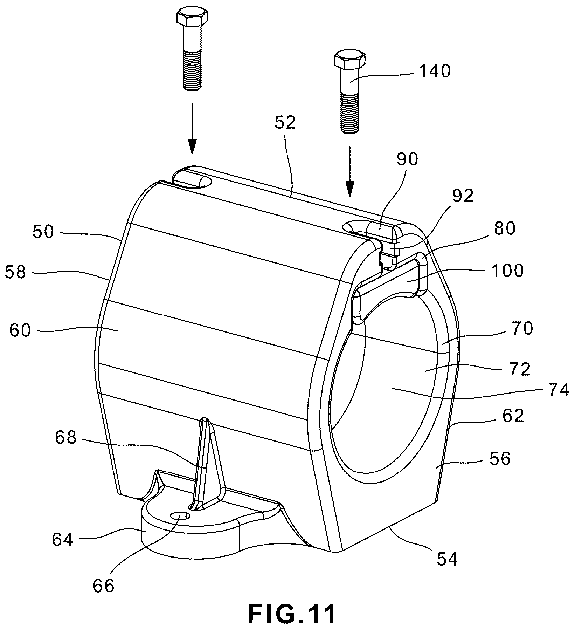

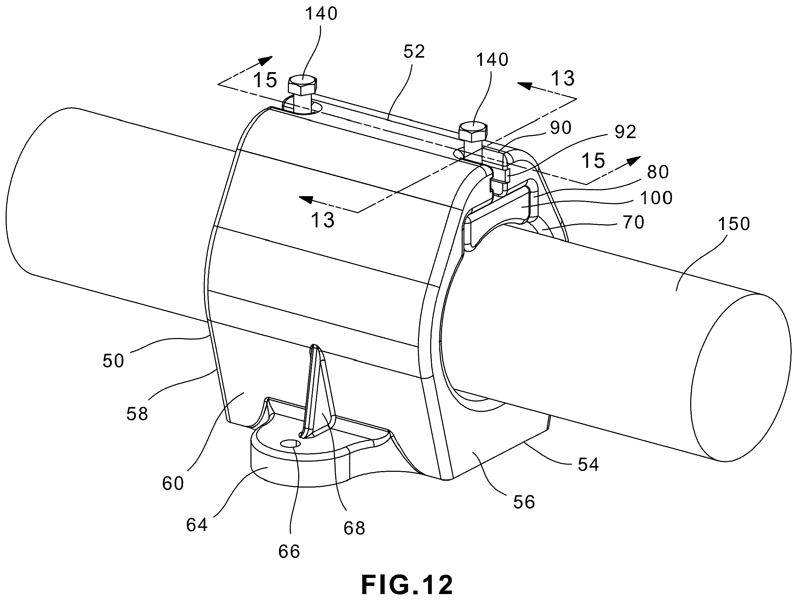

As illustrated in FIG. 11, once the clamping pad 100 has been installed in the main body 50, the threaded bolts 140 may be installed in the slotted openings 90 in the top 52 of the main body 50. The threaded bolts 140 are tightened into the clamping pad 100 (see FIG. 12). The clamping pad 100 is held in position when the ends of the threaded bolts 140 engage the retaining rings 118 in the mounting holes 116 of the clamping pad 100. At this point, the clamping pad 100 is held sub-flush with the inner surface 74 of the first passageway 72 of the main body 50.

The main body 50 of the cable guide clamp 40 is formed from an injection molded self-lubricating polymer. The cable guide clamp poses no risk of dissimilar metal corrosion when fastened to a structure. The self-lubricating polymer inner surface aids with the pull though of cables by lowering the frictional resistance force in the cable guide clamp 40. Also, as discussed above, the clamping pad 100 is sub-flush of the inner surface 74 of the first passageway 72 allowing a cable to be pulled through the main body 50 without engaging or dislodging the clamping pad 100.

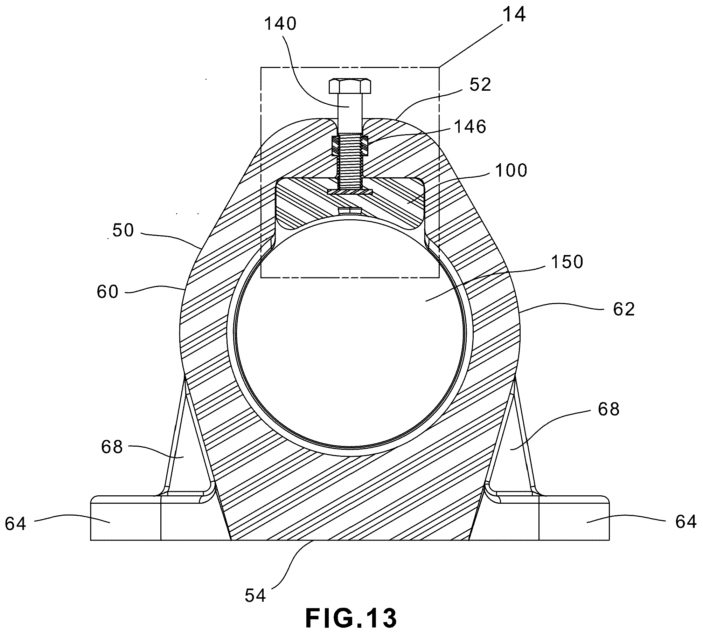

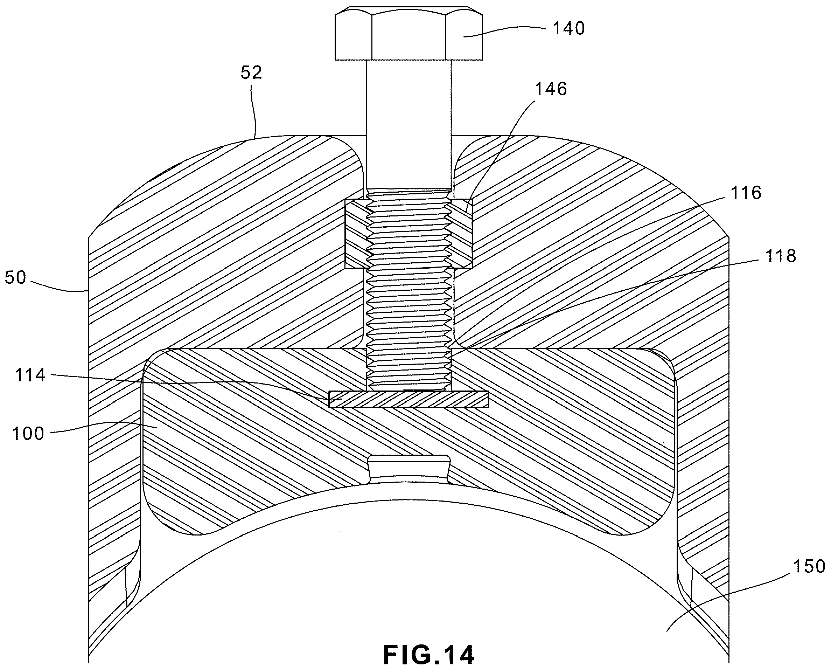

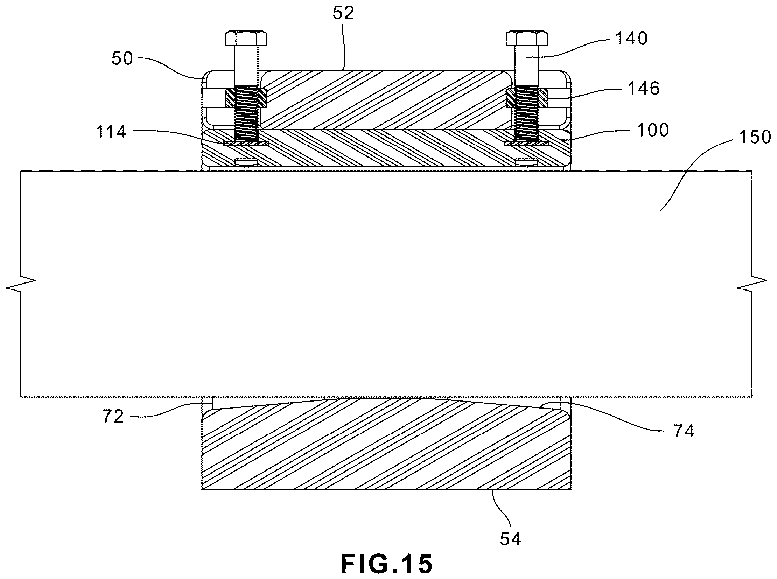

FIGS. 12-16B illustrate the cable guide clamp 40 with a cable 150 installed therein. As illustrated in FIGS. 13-15, a threaded bolt 140 is installed thru each of the nuts 146 positioned in the recesses 92 of the slotted openings 90. Each threaded bolt 140 is positioned within a mounting hole 116 of the clamping pad 100. As illustrated in FIG. 14, the threaded bolt 140 is thread past the retaining ring 118 in the mounting hole 116 until it engages the threaded steel supports 114. FIGS. 13-15 also illustrated the clamping pad 100 being sub-flush with the inner surface 74 of the first passageway 72 thereby allowing the cable 150 to be pulled through the first passageway 72.

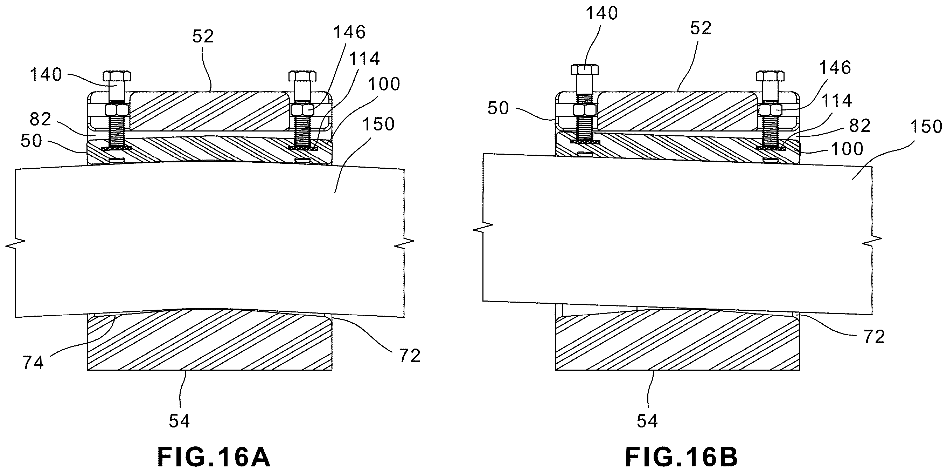

Once the cable 150 is in its final position, the threaded bolts 140 are tightened thereby forcing the clamping pad 100 downward onto the cable (see FIGS. 16A and 16B) to engage the cable. With adequate torque applied, the main body 50 and clamping pad 100 will secure the cable 150 in its final desired position.

Additionally, as illustrated in FIGS. 16A and 16B, the clamping pad 100 conforms to allow sufficient flexibility to form to the shape of the cable 150 positioned within the cable guide clamp 40. FIG. 16A illustrates a cable 150 with equal sag on each side of the cable contact points. FIG. 16B illustrates the cable 150 having an angled curve while in the cable guide clamp 40. The flexibility of the clamping pad 100 ensures more surface area clamping down onto the cable 150 which increases performance and helps to eliminate single point loads which could damage the fragile fiber optic cables that are sometimes embedded within the construction of the main power cable.

Once installed and in use, the large cables can be subjected to axial thermo-mechanical movements. For example, the cables want to move back and forth along the cable axis due to the rise and fall of the heat generated by the cable. To ensure that this motion does not dislodge the clamping pad 100 in the main body 50, the angled uprights 84 in the second passageway 82 of the main body 50 engage the notches 120 in the clamping pad 100. As a result, the angled uprights 84 prevent the clamping pad 100 from being able to slide out of the main body 50 in either direction. Additionally, the slotted openings 90, threaded bolts 140, and nuts 146 at the first front end 56, and at the second back end 58 of the main body 50 oppose each other and would further assist the clamping pad 100 to resist the axial thermo-mechanical movement of the cable 150 positioned within the cable guide clamp 40.

The cable guide clamp of the present disclosure provides a low cost and easy to install option for routing cabling. The cable guide clamp does not include any loose pieces that can be dropped and lost on site. The cable guide clamp does not require separate guide rollers for cable installation that have to be stored off site. The cable guide clamp accommodates range taking for various cable diameter sizes. The cable guide cable is reusable and provides no risk for dissimilar metal corrosion.

The cable guide clamp includes a compliant clamping pad that allows for higher clamping pressure that can clamp cables effectively regardless of the final position or angle of the cable. The cable guide clamp does not include point loads which could damage the fragile cable construction. The cable guide clamp includes integral features which counter act the axial movement caused by thermo-mechanical movements of the cable.

While the particular preferred embodiments of the present disclosure have been shown and described, it will be obvious to those skilled in the art that changes and modifications may be made without departing from the teaching of the disclosure. The matter set forth in the foregoing description and accompanying drawings is offered by way of illustration only and not as limitation. The actual scope of the disclosure is intended to be defined in the following claims when viewed in their proper perspective based on the prior art.

## Claims

1. A cable guide clamp for securing cable, the cable guide clamp comprising:
a main body having a top, a bottom, a first end, a second end, and sides; wherein the main body has a cylindrical opening that leads to a first passageway extending from the first end to the second end, and a rectangular opening that leads to a second passageway extending from the first end to the second end;
a clamping pad installed in the main body; and
at least one threaded bolt and at least one nut installed in the main body for securing the clamping pad and cable positioned within the main body.

2. The cable guide clamp of claim 1, wherein the main body comprising fixing portions extending from the bottom along the sides of the main body, the fixing portions including a mounting hole for receiving a fastener to secure the main body to a surface.

3. The cable guide clamp of claim 2, wherein the fixing portions have a support rib for providing added support to the main body.

4. The cable guide clamp of any preceding claim, wherein the rectangular opening is positioned adjacent to the circular opening.

5. The cable guide clamp of any preceding claim, wherein the clamping pad is installed in the second passageway, and the second passageway includes angled uprights for engaging the clamping pad, and optionally wherein the clamping pad is sub-flush with the first passageway of the main body.

6. The cable guide clamp of any preceding claim, wherein the top of the main body further comprising slotted openings along the first end and the second end, the slotted openings receive the at least one threaded bolt and the at least one nut used to secure the clamping pad and cable positioned within the main body, and optionally wherein the slotted openings define recesses that provide a tight fit pocket for receiving and housing the at least one nut.

7. The cable guide clamp of any preceding claim, wherein the clamping pad further comprising a flat top, an arcuate bottom, a front end, a back end, and sides.

8. The cable guide clamp of claim 7, wherein the clamping pad has mounting holes for receiving the at least one threaded bolt.

9. The cable guide clamp of claim 8, wherein the mounting holes have a retaining ring for engaging the at least one threaded bolt to maintain the clamping pad in an initial position in the main body, and/or wherein the clamping pad further comprising integral steel supports.

10. The cable guide clamp of claim 7, wherein the clamping pad includes notches extending in the top and the sides of the clamping pad, and optionally wherein the notches receive angled uprights extending in the second passageway of the main body, whereby the angled uprights prevent the clamping pad from sliding out of the main body.

11. The cable guide clamp of any preceding claim, wherein the main body is formed from a self-lubricating polymer.

12. A cable guide clamp and cable assembly, the assembly comprising:
a main body having a top, a bottom, a first end, a second end, and sides;
a clamping pad installed in the main body, the clamping pad having a flat top, an arcuate bottom, a front end, a back end, and sides;
at least one threaded bolt and at least one nut installed in the main body; and
a cable positioned within the main body;
whereby the at least one threaded bolt and the at least one nut secure the clamping pad and cable positioned within the main body.

13. The cable guide clamp assembly of claim 12, wherein the top of the main body further comprising slotted openings along the first end and the second end, the slotted openings receive the at least one threaded bolt and the at least one nut used to secure the clamping pad and cable positioned within the main body.

14. The cable guide clamp assembly of claim 12 or claim 13, wherein the main body has a cylindrical opening that leads to a first passageway extending from the first end to the second end, and a rectangular opening that leads to a second passageway extending from the first end to the second end; wherein the rectangular opening is positioned adjacent to the circular opening; wherein the clamping pad is installed in the second passageway and the cable is routed through the first passageway; and wherein the clamping pad is in an initial position sub-flush with the first passageway of the main body.

15. The cable guide clamp assembly of claim 14, wherein the clamping pad includes notches extending in the top and the sides of the clamping pad, wherein the notches receive angled uprights extending in the second passageway of the main body, whereby the angled uprights prevent the clamping pad from sliding out of the main body and/or, wherein the at least one threaded bolt is tightened to move the clamping pad from the initial position to an engaged position contacting the cable positioned in the main body.
